# EUROPEAN PATENT APPLICATION

(11) **EP 4 790 025 A1**
(43) Date of publication of application: **12.08.2026**
(21) Application number: 26151324.6
(22) Date of filing: 12.01.2026
(51) Int. Cl.: C01G 53/42, C01G 53/84, H01M 4/525

(54) **CATHODE ACTIVE MATERIAL FOR LITHIUM SECONDARY BATTERY AND LITHIUM SECONDARY BATTERY INCLUDING THE SAME**

(30) Priority: 13.01.2025 KR 20250004749
(71) Applicant: SK On Co., Ltd., Seoul 03161 (KR)
(72) Inventor: PARK, Sang Min, 34124 Daejeon (KR); KIM, Sang Bok, 34124 Daejeon (KR); KIM, Sung Beom, 34124 Daejeon (KR); LEE, Ha Eun, 34124 Daejeon (KR); LIM, Woo Seob, 34124 Daejeon (KR); CHOI, Jae Ho, 34124 Daejeon (KR)
(74) Representative: Prüfer & Partner mbB Patentanwälte · Rechtsanwälte

(57) **Abstract**

A cathode active material for a lithium secondary battery according to embodiments of the present invention includes lithium-nickel metal oxide particles. The lithium-nickel metal oxide particles have the form of secondary particles in which a plurality of primary particles are agglomerated, and include a tungsten compound at interfaces between the primary particles. When the content of tungsten measured by energy-dispersive X-ray spectroscopy (EDS) satisfies Equation 1, surface stability of the cathode active material is increased, thereby improving high-temperature performance.

## Description

### [BACKGROUND OF THE INVENTION]

### 1. Field of the Invention

The present invention relates to a cathode active material for a lithium secondary battery and a lithium secondary battery including the same. In addition, the present invention relates to a method for manufacturing a cathode active material for a lithium secondary battery.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery has been actively developed and applied due to its high operating voltage, high energy density per unit weight, and advantages in charging speed and weight reduction.

The lithium secondary battery may include: an electrode assembly including a cathode, an anode, and a separator; and an electrolyte that impregnates the electrode assembly. The lithium secondary battery may further include, for example, a pouch-type outer case that accommodates the electrode assembly and the electrolyte.

A lithium-nickel metal oxide may be used as an active material for the cathode of a lithium secondary battery. Examples of the lithium-nickel metal oxide may include a nickel-based lithium-metal oxide. The nickel-based lithium-metal oxide may include a high content of nickel, thereby increasing the capacity of the battery.

However, the nickel-based lithium-metal oxide has a problem in that, when the nickel content increases, the structural stability of the electrode is poor during repeated charging and discharging of the battery, resulting in a decrease in the cycle life characteristics of the battery. To solve these problems, a method for doping metals into the nickel-based lithium-metal oxide has been proposed, but it is insufficient to improve the performance of the battery to a desired level.

### [SUMMARY OF THE INVENTION]

An object of the present invention is to provide a cathode active material for a lithium secondary battery that exhibits improved structural stability and a lithium secondary battery including the same.

Another object of the present invention is to provide a method for manufacturing a cathode active material for a lithium secondary battery that exhibits improved structural stability.

According to exemplary embodiments, there is provided a cathode active material for a lithium secondary battery including lithium-nickel metal oxide particles in the form of secondary particles in which a plurality of primary particles are agglomerated, wherein the lithium-nickel metal oxide particles include a tungsten compound at interfaces between the primary particles and satisfy Equation 1 below.

$0.7 \leq A / \left(A+B\right) \leq 0.8$

In Equation 1, A denotes a tungsten signal ratio measured by energy-dispersive X-ray spectroscopy (EDS) from a surface of the secondary particle to a depth of 10 nm toward a center of the secondary particle, and B denotes a tungsten signal ratio measured by EDS from the surface of the secondary particle to a point corresponding to 70% or less of a radius toward the center of the secondary particle.

According to exemplary embodiments, a relative standard deviation (RSD) value of the tungsten content, measured ten times at different points from the surface of the secondary particle to a depth of 10 nm toward the center of the secondary particle using X-ray photoelectron spectroscopy, is 17% or less.

According to exemplary embodiments, the relative standard deviation (RSD) value is 4% to 17%.

According to exemplary embodiments, the residual lithium content, as determined by CS (Carbon/Sulfur) analysis, is 2768 ppm or less.

According to exemplary embodiments, the lithium-nickel metal oxide particles include a chemical structure represented by Formula 1 below:

[Formula 1] Liₐ[Ni_{b}Co_{c}Mn_{d}X_{y}]O_{c}

In Formula 1, X includes at least one of S, Al, B, Ti, Sr, Zr, P, W and K, and 0.5<a<1.5, 0.8≤b≤1, 0≤c<0.1, 0≤d<0.1, 1.5<e<2.5, and 0≤y<0.1.

According to exemplary embodiments, the tungsten compound comprises a lithium-tungsten oxide.

According to exemplary embodiments, the lithium-tungsten oxide is represented by Formula 2 below:

[Formula 2] LiₓW_{y}O_{z}

In Formula 2, 0<x≤3, 0<y≤5, and 0<z≤8.

According to exemplary embodiments, the content of tungsten, based on the total weight of the lithium-nickel metal oxide particles, is 3,000 ppm to 5,000 ppm.

According to exemplary embodiments, there is provided a lithium secondary battery including: a cathode for a lithium secondary battery including the cathode active material for a lithium secondary battery; and an anode disposed opposite the cathode.

According to exemplary embodiments, a method for manufacturing a cathode active material for a lithium secondary battery comprises: preparing preliminary lithium-nickel metal oxide particles; dry mixing the preliminary lithium-nickel metal oxide particles with a tungsten compound to form a first mixture; calcining the first mixture; preparing a second mixture by adding at least one of a sulfur compound and a boron compound, and 1% by weight to 5% of a solvent based on the total weight of the second mixture, to the calcined first mixture; and calcining the second mixture.

According to exemplary embodiments, the method may further comprise dry mixing a tungsten compound after the step of calcining the first mixture.

According to exemplary embodiments, the cathode active material comprises lithium-nickel metal oxide particles, and the lithium-nickel metal oxide particles have the form of secondary particles in which a plurality of primary particles are agglomerated, and satisfy Equations 2 to 4 below:

$Y = 0.154 X + 0.7068$

Y satisfies Equation 3, and X satisfies Equation 4,

$Y = \frac{A}{\left(A+B\right)}$

A denotes a tungsten signal ratio measured by energy-dispersive X-ray spectroscopy (EDS) from a surface of the secondary particle to a depth of 10 nm toward a center of the secondary particle, and B denotes a tungsten signal ratio measured by EDS from the surface of the secondary particle to a point corresponding to 70% or less of a radius toward the center of the secondary particle, and

$X = \frac{D}{\left(C+D\right)}$

C denotes a tungsten content (ppm) included in the first mixture based on the total weight of the lithium-nickel metal oxide particles, and D denotes a tungsten content (ppm) dry-mixed after the step of calcining the first mixture based on the total weight of the lithium-nickel metal oxide particles.

According to exemplary embodiments, a heat treatment temperature of the step of calcining the first mixture is higher than a heat treatment temperature of the step of calcining the second mixture.

According to exemplary embodiments, the step of preparing the preliminary lithium-metal oxide particles comprises heat-treating a mixture of a transition metal precursor and a lithium source, and the heat treatment temperature is higher than the heat treatment temperature of the step of calcining the first mixture and the heat treatment temperature of the step of calcining the second mixture.

According to exemplary embodiments, the content of tungsten in the first mixture formed in the step of forming the first mixture, based on the total weight of the lithium-nickel metal oxide particles, is 2,000 ppm to 4,000 ppm, and the content of tungsten dry-mixed after the step of calcining the first mixture, based on the total weight of the lithium-nickel metal oxide particles, is 2,000 ppm or less.

According to exemplary embodiments, the cathode active material for a lithium secondary battery includes secondary particles including lithium-nickel metal oxide primary particles, a tungsten compound at the interface between the primary particles, and satisfies Equation 1.

Therefore, the tungsten compound may enhance lithium ion conductivity between the primary particles, thereby reducing resistance within the cathode active material. In addition, the surface stability and structural stability of the cathode active material including the tungsten compound may be improved, thereby effectively reducing gas generation resulting from collapse of the layered structure of the cathode active material and side reactions with the electrolyte at the surface of the cathode active material. Accordingly, the high-temperature performance of a lithium secondary battery employing the cathode active material for a lithium secondary battery may be improved.

### [BRIEF DESCRIPTION OF THE DRAWINGS]

The above and other objects, features and advantages of the present disclosure will be more clearly understood from the following detailed description taken in conjunction with the accompanying drawings, in which:
FIGS. 1 and 2 are schematic plan and cross-sectional views, respectively, illustrating a lithium secondary battery according to exemplary embodiments.
FIG. 3 is a graph showing the relationship between X and Y, with the D/(C+D) value according to Examples 1 to 7 as an X value and A/(A+B) as a Y value;
FIG. 4 is an energy-dispersive X-ray spectroscopy (EDS) spectrum according to Example 1;
FIG. 5 is an EDS spectrum according to Example 4;
FIG. 6 is an EDS spectrum according to Example 7;
FIG. 7 is an EDS spectrum according to Comparative Example 6;
FIG. 8 is a graph showing the Li₂CO₃ content (ppm) of preliminary lithium-nickel metal oxide particles (A), the Li₂CO₃ content (ppm) after calcining a first mixture in which the preliminary lithium-nickel metal oxide particles and a metal oxide are dry-mixed (B), and the Li₂CO₃ content (ppm) of a cathode active material (C) in Examples 3, 6, 7, and Comparative Examples 4 and 6; and
FIGS. 9 and 10 show transmission electron microscope (TEM) images of the cathode active material according to Example 7.

### [DETAILED DESCRIPTION OF THE INVENTION]

The present invention provides a cathode active material for a lithium secondary battery and a lithium secondary battery including the same according to exemplary embodiments.

Hereinafter, embodiments of the present invention will be described in detail with reference to the drawings. However, the embodiments are merely illustrative, and the present invention is not limited to the specific embodiments described as examples.

The cathode active material for a lithium secondary battery according to exemplary embodiments (hereinafter, also abbreviated as "cathode active material") may include lithium-nickel metal oxide particles.

The cathode active material may include particles of the lithium-nickel metal oxide. For example, the amount of the particles of the lithium-nickel metal oxide may be 50% by weight ("wt%") or more based on the total weight of the cathode active material. Preferably, the amount of the particles of the lithium-nickel metal oxide in the total weight of the cathode active material is 60 wt% or more, 70 wt% or more, 80 wt% or more, or 90 wt% or more.

In one embodiment, the cathode active material may be substantially composed of particles of the lithium-nickel metal oxide.

For example, the lithium-nickel metal oxide is a metal oxide including lithium and nickel, and may further include other transition metals. For example, the transition metal may include tungsten, cobalt, or manganese.

According to exemplary embodiments, the cathode active material for a lithium secondary battery may be represented by Formula 1 below.

[Formula 1] Liₐ[Ni_{b}Co_{c}Mn_{d}X_{y}]O_{c}

In Formula 1, X may be at least one of S, Al, B, Ti, Sr, Zr, P, W and K, and a, b, c, d, e and y may satisfy 0.5<a<1.5, 0.8≤b≤1, 0≤c<0.1, 0≤d<0.1, 1.5<e<2.5, and 0≤y<0.1.

The chemical structure represented by Formula 1 indicates a bonding relationship among elements included in the layered structure or the crystal structure of the cathode active material including the lithium-nickel metal oxide, and does not exclude the presence of additional elements. For example, X may be provided as a main active element of the cathode active material. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one of W, Na, Mg, Ca, Y, Ti, Hf, V, Nb, Ta, Cr, Mo, Fe, Cu, Ag, Zn, B, Al, Ga, C, Si, Sn, Sr, Ba, Ra, P or Zr. The auxiliary element may serve as an auxiliary active element that contributes to the structural stability/output characteristics of the cathode active material together with Co or Mn, such as Al.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of the lithium-nickel metal oxide particles, or may penetrate through the surface of the lithium-nickel metal oxide particles to be incorporated into the bonding structure represented by Formula 1 above.

According to exemplary embodiments, the lithium-nickel metal oxide particles may be in the form of a secondary particle in which a plurality of primary particles are agglomerated. As used herein, the "primary particle" may refer to a monolithic particle that exists alone without forming an aggregate. As used herein, the "secondary particle" may refer to a particle having a structure in which the primary particles are agglomerated.

According to exemplary embodiments, the lithium-nickel metal oxide particles may include a tungsten compound at interfaces between the primary particles, extending from the surface of the secondary particle to a point corresponding to 70% or less of a radius toward the center of the secondary particle.

In one embodiment, the surface of the particle may refer to a region extending from an outer surface of the particle within 30% of its radius toward the center of the particle. For example, the surface of the lithium-nickel metal oxide particle may refer to a region extending approximately 10 nm from the outer surface of the lithium-nickel metal oxide particle toward the center of the particle. For example, the surface of the lithium-nickel metal oxide particle may refer to a region extending from an outer surface of the secondary particle toward the center of the secondary particle at a distance of 1 nm to 10 nm.

In exemplary embodiments, the region that is 70% or less of the radius from the surface of the secondary particle toward its center may include a depth of up to 3.8 µm from the surface of the secondary particle toward the center of the particle.

When the tungsten compound is included within the above depth range, the tungsten compound may increase lithium ion conductivity at the interface between the primary particles and improve the structural stability of the cathode active material during repeated charge and discharge cycles of the battery.

According to exemplary embodiments, the cathode active material for the lithium secondary battery satisfies Equation 1 below.

$0.7 \leq A / \left(A+B\right) \leq 0.8$

In Equation 1, A denotes a tungsten signal ratio measured by energy-dispersive X-ray spectroscopy (EDS) from a surface of the secondary particle to a depth of 10 nm toward a center of the secondary particle, and B denotes a tungsten signal ratio measured by EDS from the surface of the secondary particle to a point corresponding to 70% or less of a radius toward the center of the secondary particle.

In exemplary embodiments, the ratio A/(A+B) in Equation 1 may be 0.7 to 0.79, 0.701 to 0.789, 0.702 to 0.788, or 0.703 to 0.786.

When the cathode active material for a lithium secondary battery satisfies Equation 1, the surface of the lithium-nickel metal oxide particles is uniformly coated with a tungsten compound, thereby increasing the surface stability of the cathode active material and effectively reducing gas generation resulting from side reactions with the electrolyte at the surface of the cathode active material. Accordingly, the high-temperature performance of a lithium secondary battery employing the cathode active material for a lithium secondary battery may be improved. In addition, lithium ion conductivity may increase, thereby reducing resistance at the cathode active material interface.

In exemplary embodiments, a relative standard deviation (RSD) value of the tungsten content, measured ten times at different points from the surface of the secondary particle to a depth of 10 nm toward the center of the secondary particle using X-ray photoelectron spectroscopy, is 17% or less.

In exemplary embodiments, the relative standard deviation (RSD) value may be 4% to 17%.

The relative standard deviation (RSD) refers to a percentage of the standard deviation relative to the mean of the data and is an index for determining the relative dispersion of the data. A value closer to 0 indicates that the data are more uniform.

If the relative standard deviation (RSD) value is 17% or less, the tungsten element distribution may be uniformly present across the surfaces of the cathode active material particles. This means that the introduced tungsten element does not penetrate into the interior of the cathode active material particles, but is distributed entirely on the surface, exhibiting a uniform content and not penetrating into the interior of the particles.

Accordingly, the tungsten compound is generally present on the surface, not the interior, of the cathode active material particles. The lithium-tungsten oxide formed on the surfaces of the cathode active material particles may form a thick rock-salt phase. This structure can enhance surface stability and help secure excellent cycle life characteristics even in high-temperature environments.

According to exemplary embodiments, the X-ray photoelectron spectroscopy (XPS) may be performed on the cathode active material particles. For example, the X-ray photoelectron spectroscopy may be performed using an ESCALAB 250Xi (Thermo Fisher Scientific) as an analysis device, but is not limited thereto. In addition, the XPS analysis may be performed under the following conditions.
- X-ray source was Al Kα (1486.68 eV), and the beam size was 900 µm
- The operation mode was set to CAE (Constant Analyzer Energy)
- Scan conditions were as follows:
   Number of scans: 20 to 50
   Pass energy: 20 eV
   Dwell time: 50 ms to 100 ms
   Energy step: 0.1 eV

According to exemplary embodiments, the tungsten compound may include a lithium-tungsten oxide.

According to exemplary embodiments, the lithium-tungsten oxide may be represented by Formula 2 below:

[Formula 2] LiₓW_{y}O_{z}

In Formula 2, x, y and z may satisfy 0<x≤3, 0<y≤5, and 0<z≤8.

When the lithium-tungsten oxide is present at the primary particle interface of the cathode active material, it may effectively improve the lithium ion conductivity within the cathode active material, thereby reducing the resistance of the cathode active material. Accordingly, even during repeated charge and discharge cycles, a lithium secondary battery may be implemented with reduced capacity loss due to the low resistance of the cathode active material during lithium ion insertion and extraction.

According to exemplary embodiments, the content of tungsten, based on the total weight of the lithium-nickel metal oxide particles, is 3,000 ppm to 5,000 ppm. For example, the content of tungsten, based on the total weight of the lithium-nickel metal oxide particles, may be 3,200 ppm to 4,800 ppm, 3,500 ppm to 4,500 ppm, or 3,700 ppm to 4,300 ppm.

When the cathode active material includes tungsten in a content within the above range, a lithium secondary battery having high charge and discharge capacities and improved output characteristics may be implemented.

According to exemplary embodiments, the secondary particles may have a median particle diameter (D50) of 10 µm to 30 µm. In some embodiments, the median particle diameter (D50) of the secondary particles may be 10 µm to 20 µm. When the secondary particles have a median particle diameter within the above range, the overall surface area of the cathode active material may be increased while the cathode active material layer may be densely packed with the cathode active material, thereby enabling implementation of a high-capacity lithium secondary battery.

According to exemplary embodiments, the residual lithium content of the cathode active material for a lithium secondary battery, as determined by CS (Carbon/Sulfur) analysis, is 2768 ppm or less.

For example, the residual lithium content of the cathode active material for a lithium secondary battery, as determined by CS (Carbon/Sulfur) analysis, is 2768 ppm or less, 2700 ppm or less, 2650 ppm or less, 2600 ppm or less, or 2500 ppm or less.

The residual lithium may indicate Li₂CO₃, for example, and the residual lithium content may be determined by calculating the Li₂CO₃ content by considering the atomic weights of Li, C, and O based on the carbon (C) content obtained from the CS (Carbon/Sulfur) analysis.

When W coating using a first mixture described below is performed, W reacts with residual lithium before a reaction between S and residual lithium in a second mixture, to form a coating layer on the preliminary lithium-nickel metal oxide particles, thereby facilitating the formation of a Li-containing W oxide coating layer. A coating layer including such a Li-containing W oxide coating layer may increase lithium ion conductivity and reduce resistance at the cathode active material interface. In addition, the coating layer may increase the surface stability of the cathode active material, thereby reducing gas generation due to side reactions with the electrolyte during high-temperature cycling, thereby improving high-temperature performance.

According to exemplary embodiments, a method for manufacturing a cathode active material for a lithium secondary battery includes the steps of: preparing preliminary lithium-nickel metal oxide particles; dry mixing the preliminary lithium-nickel metal oxide particles with a tungsten compound to form a first mixture; calcining the first mixture; preparing a second mixture by adding at least one of a sulfur compound and a boron compound, and 1 wt% to 5 wt% of a solvent based on the total weight of the second mixture, to the calcined first mixture; and calcining the second mixture.

As used herein, the step of dry mixing the preliminary lithium-nickel metal oxide particles with a tungsten compound to form a first mixture; and the step of calcining the first mixture may be referred to, for example, as "Process 1." In one embodiment, a metal such as aluminum may be further mixed during the dry mixing of Process 1.

As used herein, the step of preparing a second mixture by adding at least one of a sulfur compound and a boron compound, and 1 wt% to 5 wt% of a solvent based on the total weight of the second mixture, to the calcined first mixture; and the step of calcining the second mixture may be referred to, for example, as "Process 2."

In some embodiments, the method for manufacturing a cathode active material for a lithium secondary battery may further include a step of dry mixing a tungsten compound after the step of calcining the first mixture.

By further including the step of dry mixing a tungsten compound after the step of calcining the first mixture, the resistance at the interface of the cathode active material prepared by the method for manufacturing a cathode active material for a lithium secondary battery may be reduced, and surface stability may be increased, thereby reducing gas generation due to side reactions with the electrolyte during high-temperature cycling, and improving high-temperature performance.

According to exemplary embodiments, lithium-nickel metal oxide particles may be prepared first. The lithium-nickel metal oxide particles may be in the form of secondary particles formed by agglomerating a plurality of primary particles. The lithium-nickel metal oxide particles may be prepared using methods known in the art.

According to exemplary embodiments, the step of preparing the preliminary lithium-nickel metal oxide particles may include mixing a transition metal precursor and with lithium source material and then heat-treating the mixture.

**For** example, the transition metal precursor (e.g., a Ni-Co-Mn precursor) may be prepared through a co-precipitation reaction.

For example, the transition metal precursor may be prepared through a co-precipitation reaction of metal salts. The metal salts may include nickel salts, manganese salts, and cobalt salts.

Examples of the nickel salts may include nickel sulfate, nickel hydroxide, nickel nitrate, nickel acetate, and a hydrate thereof.

Examples of the manganese salts may include manganese sulfate, manganese acetate, and a hydrate thereof.

Examples of the cobalt salts may include cobalt sulfate, cobalt nitrate, cobalt carbonate, and a hydrate thereof.

The metal salts may be mixed with a precipitant and/or chelating agent in a ratio that satisfies the content or concentration ratio of each metal described with reference to Formula 1 to prepare an aqueous solution. The aqueous solution may be co-precipitated in a reactor to prepare a transition metal precursor.

The precipitant may include an alkaline compound, such as sodium hydroxide (NaOH) or sodium carbonate (Na₂CO₃). The chelating agent may include, for example, ammonium hydroxide (e.g., NH₃·H₂O), ammonium carbonate, and the like.

The temperature of the co-precipitation reaction may be controlled, for example, in the range of about 40°C to 60°C. The reaction time may be controlled in the range of about 24 hours to 72 hours.

The lithium source material may include, for example, a lithium-containing carbonate (e.g., lithium carbonate), a hydrate (e.g., lithium hydroxide monohydrate (LiOH·H₂O)), a hydroxide (e.g., lithium hydroxide), a nitrate (e.g., lithium nitrate (LiNO₃)), a chloride (e.g., lithium chloride (LiCl)), and the like. These may be used alone or in combination of two or more thereof.

According to exemplary embodiments, the step of preparing the preliminary lithium-metal oxide particles may include mixing a transition metal precursor and with lithium raw material and then heat-treating the mixture. The heat treatment may be performed at 700°C to 800°C, preferably 720°C to 750°C, for 5 hours to 30 hours, more preferably 10 hours to 20 hours.

The lithium-nickel metal oxide prepared from the preliminary lithium-metal oxide particles may be formed in the form of secondary particles having a structure in which a plurality of primary particles are agglomerated.

According to exemplary embodiments, the cathode active material includes lithium-nickel metal oxide particles, and the lithium-nickel metal oxide particles have the form of secondary particles in which a plurality of primary particles are agglomerated, and satisfy Equations 2 to 4 below.

$Y = 0.154 X + 0.7068$

Y satisfies Equation 3, and X satisfies Equation 4,

$Y = \frac{A}{\left(A+B\right)}$

**A** denotes a tungsten signal ratio measured by energy-dispersive X-ray spectroscopy (EDS) from a surface of the secondary particle to a depth of 10 nm toward a center of the secondary particle, and B denotes a tungsten signal ratio measured by EDS from the surface of the secondary particle to a point corresponding to 70% or less of a radius toward the center of the secondary particle,

$x = \frac{D}{\left(C+D\right)}$

C denotes a tungsten content (ppm) included in the first mixture based on the total weight of the lithium-nickel metal oxide particles, and D denotes a tungsten content (ppm) dry-mixed after the step of calcining the first mixture based on the total weight of the lithium-nickel metal oxide particles.

When the cathode active material prepared by the above method for manufacturing a cathode active material satisfies Equations 2 to 4, tungsten may be uniformly coated on the surface of the lithium-nickel metal oxide particles, thereby enhancing the surface stability of the cathode active material.

According to exemplary embodiments, a heat treatment temperature of the step of calcining the first mixture is higher than a heat treatment temperature of the step of calcining the second mixture.

According to exemplary embodiments, the step of preparing the preliminary lithium-metal oxide particles includes heat-treating a mixture of a transition metal precursor and a lithium source, and the heat treatment temperature is higher than the heat treatment temperature of the step of calcining the first mixture and the heat treatment temperature of the step of calcining the second mixture.

According to exemplary embodiments, the heat treatment temperature in the step of calcining the first mixture may be 500 °C to 700 °C.

According to exemplary embodiments, the heat treatment temperature in the step of calcining the second mixture may be 300 °C to 400 °C.

According to exemplary embodiments, the content of tungsten in the first mixture formed in the step of forming the first mixture, based on the total weight of the lithium-nickel metal oxide particles, may be 2,000 ppm to 4,000 ppm.

According to exemplary embodiments, the content of tungsten dry-mixed into the fired first mixture after the step of calcining the first mixture, based on the total weight of the lithium-nickel metal oxide particles, may be 2,000 ppm or less.

According to exemplary embodiments, the sum of the tungsten content in the first mixture formed in the step of forming the first mixture and the tungsten content dry-mixed after the step of calcining the first mixture, based on the total weight of the lithium-nickel metal oxide particles, may be 4,000 ppm or less.

According to exemplary embodiments, the method of dry mixing is not particularly limited and may be any method known in the art. For example, dry mixing may be performed in a dry high-speed mixer.

According to exemplary embodiments, the metal oxide may include at least one of lithium-tungsten oxide and aluminum oxide.

According to exemplary embodiments, the metal oxide may be represented by Formula A below.

[Formula A] Lₐ₁N_{b1}M_{c1}O_{d1}

**In** Formula A, al, bl, c1 and d1 may satisfy al>0, b1≥0, c1≥0, and d1>0, and L, N and M are each independently Al, Ti, Zr, W, Sr, Ba, Ta, Nb, Mg, Si, H, or NH₄.

For example, the metal oxide may be at least one selected from the group consisting of Al₂O₃, TiO₂, Ti₂O₃, ZrO₂, B₂O₃, SrO₂, SrAl₂O₄, SrTiO₃, SrWO₄, BaO, WO₃, (NH₄)₁₀H₂(W₂O₇)₆, MgO, Ta₂O₅, Nb₂O₅, MoO₃, H₄[W₁₂SiO₄0], H₄SiO₄· 12MoO₃, and (NH₄)₂MoO₄.

According to exemplary embodiments, the tungsten compound may be ammonium paratungstate (APT). The ammonium paratungstate may be mixed such that the content of tungsten is 500 ppm to 10,000 ppm or 1,000 ppm to 5,000 ppm, based on the total weight of the secondary particles.

In some embodiments, the sulfur compound may be represented by Formula B below.

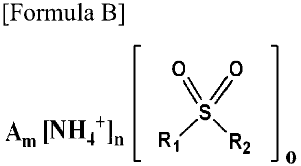

In Formula B, m, n and o may satisfy m≥0, n>0, o>0, A is Al, Ti, Zr, W, Sr, Ba, Ta, Nb, Mo, K, Na, or H, R₁ and R₂ are the same or different, and are each independently O⁻, NH₂, NH₃⁺, OH, or a substituted or unsubstituted hydrocarbon group having 1 to 3 carbon atoms, and the hydrocarbon group may be substituted with a halogen group, a cyano group, a hydroxyl group, a phosphoric acid group, a carboxyl group, or a salt thereof.

In some embodiments, the sulfur compound may be (NH₄)₂SO₄, NH₂SO₃H, NH₄SO₃NH₂, Al₂(SO₄)₃, AlK(SO₄)₂, Al(NH₄)(SO4)₂, Ti(SO₄)₂, or TiOSO₄, SrSO₄.

The ammonium ion included in the sulfur compound is an ion composed solely of non-metallic elements and may be vaporized and removed during the calcining process.

In some embodiments, the boron compound may be B₂O₃, H₃BO₃, (NH₄)B₅O₈, LiBO₂, Li₂B₄O₇, Na₂B₄O₇, NaBO₂, Ca(BO₂)₂, NaBO₃, or (NH₄)₂B₄O₇.

In some embodiments, the boron compound may be H₃BO₃.

In some embodiments, the content of the sulfur compound or the boron compound in the second mixture may be 0.2 parts by weight to 2 parts by weight, based on 100 parts by weight of the second mixture.

When the sulfur compound or the boron compound satisfies the above-described weight range, the cycle life characteristics of the battery may be improved while maintaining its output characteristics.

In exemplary embodiments, the step of preparing a second mixture may include a step of preparing an aqueous solution containing a sulfur compound or an aqueous solution containing a boron compound by mixing the first mixture with at least one of a sulfur compound and a boron compound; and 1 wt% to 5 wt% of a solvent, based on the total weight of the second mixture.

Preferably, the second mixture may employ a previously prepared aqueous solution containing a sulfur compound or an aqueous solution containing a boron compound. In some embodiments, the solvent included in the aqueous solution containing the sulfur compound or an aqueous solution containing the boron compound may be present in an amount of 1 wt% to 5 wt% based on the total weight of the second mixture.

In exemplary embodiments, the second mixture may include a sulfur compound, or may include both a sulfur compound and a boron compound.

In some embodiments, the solvent may include deionized water (DIW).

During the process of preparing the first mixture, an excess amount of lithium raw material (lithium salt) may be used to increase the yield of lithium-nickel metal oxide particles or to ensure the stability of the synthesis process. In such a case, lithium compounds, including lithium hydroxide (LiOH) and lithium carbonate (Li₂CO₃), may remain on the surface of the secondary particles of the lithium-nickel metal oxide. However, when the cathode active material is prepared using the above-described method for manufacturing a cathode active material, the residual lithium on the surface of the secondary particles of the lithium-nickel metal oxide may be effectively removed through a reaction between the tungsten compound and the residual lithium compound.

In exemplary embodiments, the content of the solvent in the second mixture may be 1 wt% to 5 wt%, 2 wt% to 5 wt%, 3 wt% to 5 wt%, or 4 wt% to 5 wt% based on the total weight of the second mixture.

When the solvent satisfies the above-described weight range, the coatability of the sulfur compound or the boron compound on the cathode active material for a lithium secondary battery may be improved, thereby enhancing the cycle life characteristics of the battery while maintaining its output characteristics.

In exemplary embodiments, the step of preparing a second mixture by adding at least one of a sulfur compound and a boron compound, and 1 wt% to 5 wt% of a solvent based on the total weight of the second mixture, to the calcined first mixture may include a drying process in which heat of 250 °C or less is applied under a vacuum atmosphere for approximately 8 hours to 20 hours. For example, the drying process may be performed at a temperature of 100°C to 200 °C. During this process, not only the solvent but also other volatile impurities included in the second mixture may be removed.

In exemplary embodiments, the step of calcining the first mixture may be performed by introducing the first mixture into a calcination furnace and calcining it at a temperature of 500 °C to 700 °C under an oxygen atmosphere.

In exemplary embodiments, the step of calcining the second mixture may be performed by introducing the second mixture into a calcination furnace and calcining it at a temperature of 300 °C to 400 °C under an oxygen atmosphere.

According to exemplary embodiments, a lithium secondary battery is provided, which includes a cathode including the cathode active material and an anode disposed opposite the cathode.

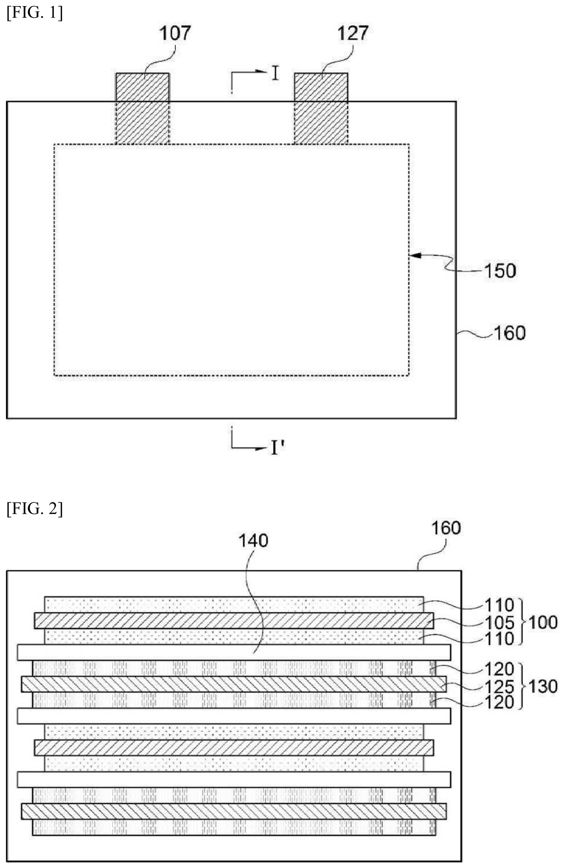

Hereinafter, the lithium secondary battery which includes a cathode including the above-described cathode active material for a lithium secondary battery will be described with reference to FIGS. 1 and 2.

Referring to FIGS. 1 and 2, the lithium secondary battery may include a cathode 100 including the above-described cathode active material and an anode 130 disposed opposite the cathode 100.

The cathode 100 may include a cathode active material layer 110 formed by applying a slurry including the above-described cathode active material onto a cathode current collector 105.

For example, a cathode slurry may be prepared by mixing the cathode active material with a binder, a conductive material, and/or a dispersant in a solvent, followed by stirring the same. The prepared cathode slurry may be coated onto at least one surface of the cathode current collector 105, and then dried and roll-pressed to fabricate the cathode 100.

The cathode current collector 105 may include stainless steel, nickel, aluminum, titanium, or an alloy thereof. The cathode current collector 105 may also include aluminum or stainless steel whose surface is treated with carbon, nickel, titanium, or silver.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, the amount of the binder for forming the cathode active material layer 110 may be reduced and the amount of the cathode active material may be relatively increased. Thereby, the output and capacity of the secondary battery may be improved.

The conductive material may be included to facilitate electron transfer between the active material particles. For example, the cathode conductive material may include carbon-based conductive materials such as graphite, carbon black, graphene, or carbon nanotubes; and/or metal-based conductive materials such as tin, tin oxide, and titanium oxide; as well as perovskite materials such as LaSrCoO₃, and LaSrMnO₃, etc.

The anode 130 may include an anode current collector 125 and an anode active material layer 120 formed by coating an anode active material onto at least one surface of the anode current collector 125.

As the anode active material, any active material known in the art may be used, so long as it is capable of absorbing and releasing lithium ions, without particular limitation. For example, carbon-based materials such as crystalline carbon, amorphous carbon, carbon composites, carbon fibers, etc.; a lithium alloy; silicon or tin may be used. Examples of the amorphous carbon may include hard carbon, coke, mesocarbon microbead (MCMB) calcined at 1500°C or lower, mesophase pitch-based carbon fiber (MPCF) or the like. Examples of the crystalline carbon may include graphite-based carbon such as natural graphite, graphitized coke, graphitized MCMB, graphitized MPCF or the like. Other elements contained in the lithium alloy may include, for example, aluminum, zinc, bismuth, cadmium, antimony, silicon, lead, tin, gallium, indium or the like.

The anode current collector 125 may include, for example, gold, stainless steel, nickel, aluminum, titanium, copper, or an alloy thereof, and preferably includes copper or a copper alloy.

In some embodiments, an anode slurry may be prepared by mixing and stirring the anode active material with a binder, a conductive material and/or a dispersant in a solvent. The anode slurry may be coated on the anode current collector, followed by drying and roll-pressing to fabricate the anode 130.

As the binder and the conductive material, materials which are substantially the same as or similar to the above-described materials may be used. In some embodiments, a binder for forming an anode may include, for example, an aqueous binder such as styrene-butadiene rubber (SBR) to ensure compatibility with the carbon-based active material, and may be used together with a thickener such as carboxymethyl cellulose (CMC).

In some embodiments, a separator 140 may be interposed between the cathode 100 and the anode 130. The separator 140 may include a porous polymer film made of a polyolefin polymer such as ethylene homopolymer, propylene homopolymer, ethylene/butene copolymer, ethylene/hexene copolymer, or ethylene/methacrylate copolymer. The separator 140 may include a nonwoven fabric made of glass fibers having a high melting point, polyethylene terephthalate fibers, etc.

According to exemplary embodiments, an electrode cell is defined by the cathode 100, the anode 130, and the separator 140, and a plurality of electrode cells may be stacked to form, for example, a jelly roll type electrode assembly 150. For example, the electrode assembly 150 may be formed by winding, stacking, or folding the separator 140.

The electrode assembly may be accommodated in a case 160 together with an electrolyte to define the lithium secondary battery. According to exemplary embodiments, a non-aqueous electrolyte may be used as the electrolyte.

The non-aqueous electrolyte may include a lithium salt of an electrolyte and an organic solvent. The lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfuroxide, acetonitrile, dimethoxyethane, diethoxyethane, vinylene carbonate, sulfolane, γ-butyrolactone, propylene sulfite and tetrahydrofuran, etc. may be used. These may be used alone or in combination of two or more thereof.

**As** illustrated in FIG. 1, electrode tabs (cathode tabs and anode tabs) may be formed from the cathode current collector 105 and the anode current collector 125, each belonging to a respective electrode cell, and may extend to one side of the case 160. The electrode tabs may be welded together with the one side of the case 160 to form electrode leads (a cathode lead 107 and an anode lead 127) that extend from or are exposed to the outside of the case 160.

The lithium secondary battery may be manufactured, for example, in a cylindrical, prismatic, pouch, or coin type using a can.

### Example 1

### Preparation of Cathode Active Material

**NiSO₄,** CoSO₄, and MnSO₄ were mixed in a ratio of 0.885:0.090:0.025 using distilled water from which dissolved oxygen had been removed by bubbling N₂ for 24 hours. The mixed solution was introduced into a reactor at 50 °C, and a co-precipitation reaction was performed for 48 hours using NaOH and NH₃·H₂O as a precipitant and a chelating agent, to obtain Ni_{0.885}Co_{0.09}Mn_{0.025}(OH)₂ as a transition metal precursor. The obtained precursor was dried at 80 °C for 12 hours and then further dried at 110 °C for 12 hours.

Lithium hydroxide and the transition metal precursor were added to a dry high-speed mixer in a ratio of 1.01:1 and uniformly mixed for 5 minutes.

The resulting mixture was placed in a calcination furnace, heated to 720 °C to 750 °C at a rate of 2 °C/min, and maintained at 720°C to 750 °C for 10 hours. During the heating and calcination, oxygen was continuously supplied at a flow rate of 20 L/min. After completion of the calcination, the calcined product was allowed to cool naturally to room temperature and then pulverized and classified to obtain preliminary lithium-nickel metal oxide particles.

Based on the total weight of the preliminary lithium-nickel metal oxide particles, ammonium paratungstate (APT) was added to achieve a tungsten content of 4,000 ppm, and aluminum oxide (Al₂O₃) was added to achieve an aluminum content of 1,000 ppm. Mixing was performed using a high-speed mixer for 5 minutes to form a first mixture. The first mixture was placed in a calcination furnace, and while supplying oxygen at a flow rate of 20 L/min, the temperature was increased to 700 °C at a heating rate of 2 °C/min, and the mixture was maintained at that temperature for 8 to 10 hours.

To achieve a sulfur content of 3,000 ppm, 1 to 2 parts by weight of ammonium sulfate ((NH₄)₂SO₄) powder was added based on 100 parts by weight of the first mixture, and 5 parts by weight of deionized water (DIW) was added to prepare a second mixture.

The second mixture was dried in a vacuum oven at 100 °C to 200 °C for approximately 10 hours to remove moisture, including the solvent. The dried second mixture was placed in a calcination furnace, and while supplying oxygen at a flow rate of 20 L/min, the temperature was increased to 300 °C at a heating rate of 2 °C/min, and maintained at that temperature for 10 hours.

After calcination, cathode active material particles having a D50 of 11 µm or less were obtained by classification through a 325-mesh sieve.

Cathode active materials of Examples 2 to Comparative Examples 6 were prepared in the same manner as in Example 1, except that the conditions were varied as shown in Table 1 below.

**[TABLE 1]**

| | First mixture preparation step | | Second mixture preparation step | | |
|---|---|---|---|---|---|
| | Coating sauce (ppm) | Heat treatme nt tempera ture (°C) | Coating sauce (ppm) | Add ed solv ent (DI W) (wt %) | Heat treatme nt tempera ture (°C) |
| Example 1 | APT(4000)+Al₂O₃ (1000) | 700 | (NH₄)₂SO₄(3000) | 5 | 300 |
| Example 2 | APT(4000)+Al₂O₃ (1000) | 700 | (NH₄)₂SO₄(3000) | 5 | 400 |
| Example 3 | APT(4000)+Al₂O₃ (1000) | 700 | (NH₄)₂SO₄(3000)+H₃BO₃(500) | 5 | 300 |
| Example 4 | APT(3000)+Al₂O₃ (1000) | 700 | APT(1000)+(NH₄)₂SO₄(3000) | 5 | 300 |
| Example 5 | APT(3000)+Al₂O₃ (1000) | 700 | APT(1000)+(NH₄)₂SO₄(3000) | 5 | 400 |
| Example 6 | APT(3000)+Al₂O₃ (1000) | 700 | APT(1000)+(NH₄)₂SO₄(3000)+H₃BO₃(5 00) | 5 | 300 |
| Example 7 | APT(2000)+Al₂O₃ (1000) | 700 | APT(2000)+(NH₄)₂SO₄(3000)+H₃BO₃(5 00) | 5 | 300 |
| Compar ative Example 1 | APT(4000)+Al₂O₃ (1000)+ (NH₄)₂SO₄(3000) | 700 | - | - | - |
| Compar ative Example 2 | APT(4000)+Al₂O₃ (1000) | 700 | (NH₄)₂SO₄(3000)+H₃BO₃(500) | - | 300 |
| Compar ative Example 3 | APT(3000)+Al₂O₃ (1000) | 700 | APT(1000)+(NH₄)₂SO₄(3000)+H₃BO₃(5 00) | - | 300 |
| Compar ative Example 4 | Al₂O₃(1000) | 700 | APT(4000)+(NH₄)₂SO₄(3000)+H₃BO₃(5 00) | 5 | 300 |
| Compar ative Example 5 | - | 700 | APT(4000)+Al₂O₃(1000)+(NH₄)₂SO₄(3 000)+H₃BO₃(500) | 5 | 300 |
| Compar ative Example 6 | APT(4000)+Al₂O₃ (1000)+ (NH₄)₂SO₄(3000) | - | H₃BO₃(500) | 5 | 300 |

### Manufacture of Half-Coin Cell

A half-coin cell (2032 type) was manufactured using the above-described cathode active material.

Specifically, the cathode active material, Denka Black as a conductive material, and PVDF as a binder were mixed in a mass ratio of 93:5:2 to prepare a cathode slurry. The prepared cathode slurry was applied to an aluminum current collector, and then dried and roll-pressed to a density of 3.3 g/cc to fabricate a cathode.

Lithium metal was used as an anode.

The fabricated cathode and anode were notched into circular shapes having diameters of Φ14 and Φ16, respectively, and stacked with a porous separator (polyethylene, thickness: 13 µm) notched into Φ19 interposed between the cathode and the anode to form an electrode cell. The electrode cell was placed in a coin-cell outer case having a diameter of 20 mm and a height of 1.6 mm, an electrolyte was injected, and the cell was assembled, followed by aging for 12 hours to allow the electrolyte to impregnate into the electrode cell.

**A** 1 M LiPF₆ solution prepared using a mixed solvent of EC/EMC (30/70; volume ratio) was used as the electrolyte.

Formation charging and discharging were performed on the half-coin cells manufactured as described above (charging conditions: CC-CV 0.1C, 4.3 V, 0.005C cut-off; discharging conditions: CC 0.1C, 3 V cut-off).

### Experimental Example 1: TEM-EDS Analysis

Transmission electron microscope (TEM) images of the cathode active materials prepared in the examples and comparative examples were captured, and elemental mapping images and EDS spectra were obtained using energy-dispersive X-ray spectroscopy (EDS) therefrom.

Specifically, the tungsten (W) signal ratio from the surface of the cathode active material particle (D50 = 11 µm) to a depth of 10 nm toward the center of the particle was defined as A, and the tungsten (W) signal ratio from the surface of the particle to a depth of 3.8 µm toward the center was defined as B, and these values are described in Table 2 below.

In addition, the tungsten content (ppm) contained in the metal oxide included in the first mixture, based on the total weight of the lithium-nickel metal oxide particles, was defined as C, and the tungsten content (ppm) contained in the metal oxide included in the second mixture, based on the total weight of the lithium-nickel metal oxide particles, was defined as D, and these values are described in Table 2 below.

**[TABLE 2]**

| | A | B | A/(A+B) | C | D | D/(C+D) |
|---|---|---|---|---|---|---|
| Example 1 | 30 | 12 | 0.714 | 4000 | 0 | 0 |
| Example 2 | 103 | 42 | 0.710 | 4000 | 0 | 0 |
| Example 3 | 87 | 37 | 0.702 | 4000 | 0 | 0 |
| Example 4 | 142 | 48 | 0.747 | 3000 | 1000 | 0.25 |
| Example 5 | 185 | 62 | 0.749 | 3000 | 1000 | 0.25 |
| Example 6 | 159 | 57 | 0.737 | 3000 | 1000 | 0.25 |
| Example 7 | 80 | 22 | 0.784 | 2000 | 2000 | 0.5 |
| Comparative Example 1 | 95 | 42 | 0.693 | 4000 | 0 | 0 |
| Comparative Example 2 | 93 | 46 | 0.669 | 4000 | 0 | 0 |
| Comparative Example 3 | 108 | 48 | 0.692 | 3000 | 1000 | 0.25 |
| Comparative Example 4 | 97 | 43 | 0.693 | 0 | 4000 | 1 |
| Comparative Example 5 | 102 | 51 | 0.667 | 0 | 4000 | 1 |
| Comparative Example 6 | 50 | 90 | 0.357 | 0 | 4000 | 1 |

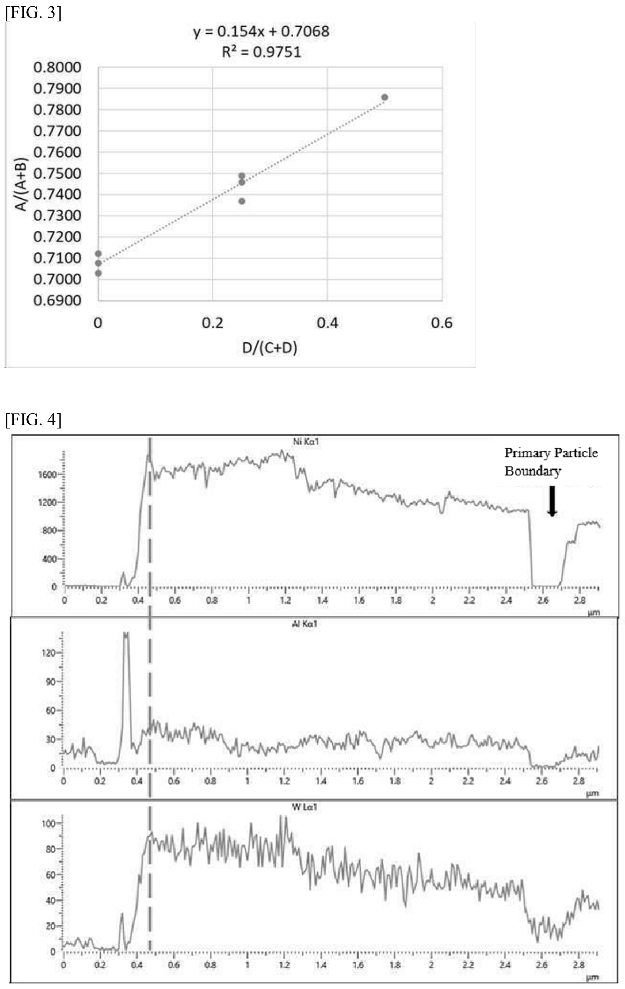

If the value of D/(C+D) according to Examples 1 to 7 is defined as X and the value of A/(A+B) is defined as Y, the relationship between X and Y is graphically represented as shown in FIG. 3, which satisfies Equation 2 described above.

$Y = 0.154 X + 0.7068$

When a tungsten compound was added to the first mixture and the second mixture, as in Examples 4 and 7, the value of A/(A+B) was 0.74 or higher, and in Comparative Example 6, in which heat treatment at 700 °C was not performed, the value of A/(A+B) was 0.357, indicating that the tungsten signal ratio at the surfaces of the cathode active material particles was lower than that of the interior of the particles.

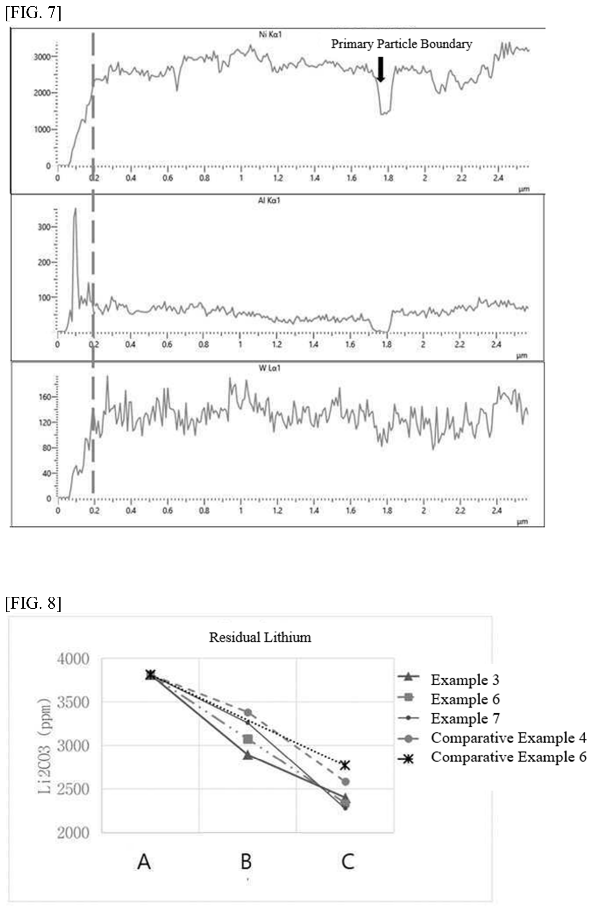

FIGS. 4 to 6 illustrate EDS spectra according to Examples 1, 4, and 7, respectively, and FIG. 7 illustrates the EDS spectrum according to Comparative Example 6.

In the graph of FIG. 4, the X-axis represents the position from the particle surface (left) to the interior (right), and the Y-axis represents the TEM EDS signal intensity of the corresponding element. Through this, the intensity and presence of elemental signals at specific positions inside the cathode material may be analyzed to determine whether coating or doping has occurred. Because the cathode material has a high Ni content, the boundary of the primary particles may be identified in the first graph based on the Ni distribution. The signal of the doped element appears inside the primary particles (regions with high Ni content), and when coating is present, the elemental signal tends to increase at the particle surface or at the primary particle boundary (regions where the Ni content decreases).

**In** Example 1, the Ni content measured around 0.3 on the X-axis confirms that this portion corresponds to the particle surface. In addition, the Al signal rapidly increases and then decreases, indicating that Al is coated on the particle surface. The absence of an Al signal in the X-axis range of 2.5 to 2.7 indicates that a small amount of Al is doped within the primary particle and that Al is not coated within the particle.

A weak W signal is also observed around 0.3 due to coating, and a stronger W signal is observed within the primary particle due to W doping.

In Example 1, a W signal is detected even at the particle boundaries where the Ni signal decreases, indicating that W is present on the particle surface of the cathode active material and that the W coating source has penetrated into the particle interior.

Accordingly, in Example 1, where W was introduced in Process 1 and not introduced in Process 2 after the heat treatment, it can be confirmed that a greater amount of W penetrated into the interior of the particles than remained on the surface of the active material particles.

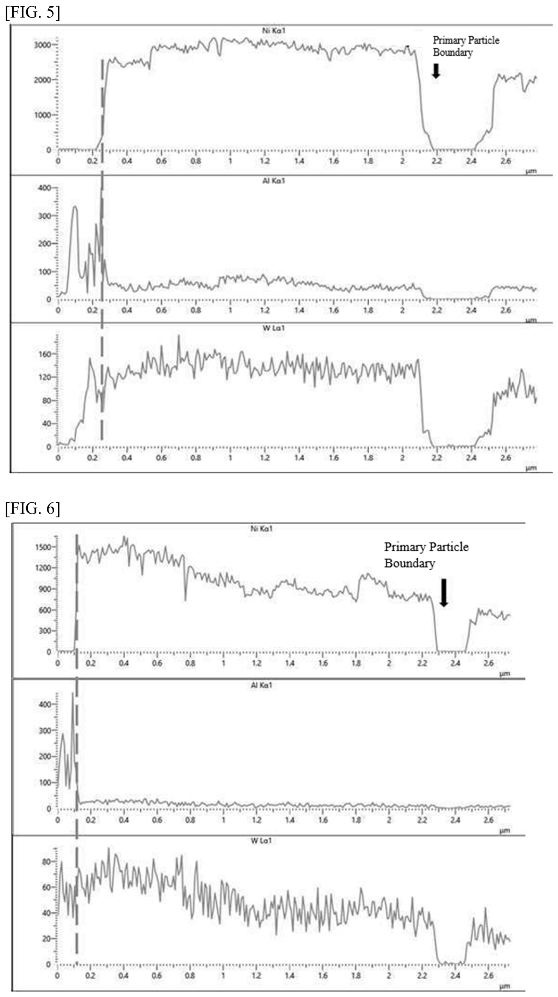

FIG. 5 illustrates the EDS spectrum of Example 4. In Example 4, the W signal at the particle surface is higher than that of Example 1. Although the doped W signal appears within the primary particle, the W signal is barely detected at the primary particle boundary based on the Ni content, indicating that no W originating from the coating has penetrated into the interior of the active material particles. From the graph of FIG. 5, it can be inferred that the W coating source introduced in Process 2 did not penetrate into the particles and remained in the coating layer formed on the surface of the cathode active material in Process 1.

FIG. 6 illustrates the EDS spectrum of Example 7. In Example 7, the W coating signal on the surface of the cathode active material near 0.1 on the X-axis is as high as the internal W doping signal, and the W signal appears and disappears along the internal particle boundaries. As in Example 4 of FIG. 5, it can be seen that the W introduced in Process 2 forms a coating layer on the surface of the cathode active material with substantially no penetration into the interior of the particles.

FIG. 7 illustrates the EDS spectrum according to Comparative Example 6. In Comparative Example 6, which adopts a conventional semi-dry process, the W content remains relatively high compared to the Al content, which is not detected at 1.75 where the Ni content decreases. From the high W content observed at the active material particle boundaries, it can be confirmed that W has penetrated into the interior of the active material particles.

### Experimental Example 2: CS (Carbon/Sulfur) Analysis

Residual lithium may refer to, for example, Li₂CO₃. When analyzing residual lithium in the cathode active material, the HCl titration method referencing the Wader Method is generally used; however, the coating material obtained from the sulfonyl compound and the metal oxide is titrated by HCl, thereby making it difficult to accurately calculate the residual lithium value. To address this issue, the Li₂CO₃ content was calculated by considering the atomic weights of Li, C, and O based on the carbon (C) content obtained from the CS analysis.

Specifically, a CS analyzer (Carbon/Sulfur analysis equipment; model CS844, manufactured by LECO) was used. The sample amount was selected to fall within the measurement range of the standard sample obtained during calibration curve preparation. Each of the lithium-transition metal composite oxide particles obtained according to the above-described examples and comparative examples was divided into 0.02 g to 0.04 g, placed in a ceramic crucible, and introduced together with a combustion aid (LECOCEL II) and IRON Chip in a ratio of 1:1. Oxygen (O₂) was supplied as combustion gas at a flow rate of 3 L/min in a highfrequency induction device, and combustion was carried out at approximately 2,600 °C to 2,700 °C, after which the inorganic carbon oxide gas generated by combustion was passed through an infrared detection cell. During this process, the change in infrared absorption relative to the blank was measured to quantitatively detect the carbon content in the lithium-transition metal composite oxide particles. The analysis results are described in Table 3 below.

**[TABLE 3]**

| | A | B | C |
|---|---|---|---|
| Example 1 | | 2891 | 2768 |
| Example 2 | | 2891 | 2645 |
| Example 3 | 3813 | 2891 | 2399 |
| Example 4 | | 3075 | 2583 |
| Example 5 | | 3075 | 2522 |
| Example 6 | | 3075 | 2337 |
| Example 7 | | 3260 | 2276 |
| Comparative Example 1 | | - | 2891 |
| Comparative Example 2 | | 2891 | 2768 |
| Comparative Example 3 | | 3075 | 2706 |
| Comparative Example 4 | | 3383 | 2583 |
| Comparative Example 5 | | 3567 | 3137 |
| Comparative Example 6 | | 2891 | 2768 |

In Table 3 above,
A: Li₂CO₃ content (ppm) of the preliminary lithium-nickel metal oxide particles.
B: Li₂CO₃ content (ppm) after calcining the first mixture obtained by dry mixing the preliminary lithium-nickel metal oxide particles with the metal oxide.
**C:** Li₂CO₃ content (ppm) of the cathode active material.

In the experiments of Examples 1 to 7, differences associated with the tungsten content were examined. As a result, during the step of calcining the first mixture, a decrease in residual lithium was observed in the intermediate sample after heat treatment at 700 °C, and the higher the content of tungsten introduced during the dry coating, the lower the residual lithium. During the step of calcining the second mixture, when the tungsten content was supplemented such that the tungsten content finally introduced during preparation of the cathode active material was 4,000 ppm, the residual lithium content of the final product remained at a similar level. In addition, when a boron compound was added in the step of forming the second mixture, or when the calcination temperature in the step of calcining the second mixture was increased, the residual lithium was further reduced.

On the other hand, among the comparative examples, when a heat treatment at 700 °C was performed in the step of calcining the first mixture but a semi-dry solution was not added, the coating performed in a dry environment exhibited reduced reactivity with residual lithium, resulting in a smaller reduction in residual lithium even though the final product contained the same amount of coated tungsten. In Comparative Example 6, which employed a semi-dry process without including the 700 °C heat treatment and performed only a single heat treatment at a low temperature, the reduction in residual lithium was minimal. In contrast, in Comparative Example 5, although no coating source was introduced, the 700 °C heat treatment alone resulted in an additional reduction in residual lithium.

FIG. 8 graphically illustrates the experimental results for Examples 3, 6, and 7, and Comparative Examples 4 and 6. The graph in FIG. 8 shows the Li₂CO₃ content (ppm) of the preliminary lithium-nickel metal oxide particles (A), the Li₂CO₃ content (ppm) after calcining the first mixture (B), and the Li₂CO₃ content (ppm) of the cathode active material (C). From the graph in FIG. 8, it can be confirmed that the reduction in residual lithium is greater in Examples 3, 6, and 7 than in Comparative Examples 4 and 6.

### Experimental Example 3: XPS Surface Analysis

The components at depths of 1 nm to 10 nm from the surfaces of the cathode active material particles prepared in the examples and comparative examples were analyzed by X-ray photoelectron spectroscopy (XPS). The XPS analysis conditions were as follows:
- The equipment used was ESCALAB 250Xi (Thermo Fisher Scientific)
- X-ray source was Al Kα (1486.68 eV), and the beam size was 900 µm
- The operation mode was set to CAE (Constant Analyzer Energy)
- Scan conditions were as follows:
   Number of scans: 20 to 50
   Pass energy: 20 eV
   Dwell time: 50 ms to 100 ms
   Energy step: 0.1 eV

XPS etching was performed to a depth of 10 nm, and XPS analysis was repeated 10 times at different surface locations of each cathode active material particle.

In the XPS analysis, the S2p_{3/2} peak area (172-168 eV), W4f_{7/2} peak area, and Al2p peak area were each integrated to obtain the content data of sulfur (S), tungsten (W), and aluminum (Al), and quantitative values were derived by calculating the relative standard deviation (RSD, %) from the 10 repeated measurements, and the results are described in Table 4 below.

**[TABLE 4]**

| RSD (%) | W | S | Al | B |
|---|---|---|---|---|
| Example 1 | 17 | 16 | 8.5 | - |
| Example 2 | 14 | 13 | 9.3 | - |
| Example 3 | 16 | 17.8 | 12 | 31 |
| Example 4 | 11 | 20 | 13 | - |
| Example 5 | 9 | 10.7 | 9 | - |
| Example 6 | 6 | 17 | 9.2 | 27 |
| Example 7 | 4 | 18 | 8.8 | 28 |
| Comparative Example 1 | 38.1 | 39.2 | 30 | - |
| Comparative Example 2 | 27.9 | 30.6 | 27.1 | 28 |
| Comparative Example 3 | 18 | 30 | 10 | 28.8 |
| Comparative Example 4 | 37 | 40 | 58.8 | 44 |
| Comparative Example 5 | 42 | 36 | 29 | 53 |
| Comparative Example 6 | 54.3 | 56.4 | 54.3 | 57 |

When a coating source having a melting point near the heat treatment temperature range is used, the coating source melts and penetrates from the surface of the cathode active material into the interior. For certain coating sources having such characteristics, when a coating layer formed by the first mixture is followed by an additional dry coating of the same coating source to form a coating layer by the second mixture, the amount of the coating source penetrating into the cathode active material in the coating layer formed by the second mixture is relatively reduced compared to the coating layer formed by the first mixture at a high temperature. Accordingly, the amount of elements remaining on the surface of the cathode active material increases, thereby increasing the RSD and improving coating uniformity.

In Examples 1 to 7, the total amount of tungsten added during preparation of the cathode active material was equally maintained at 4,000 ppm, and the tungsten content was divided between the first mixture (hereinafter referred to as Process 1) and the second mixture (hereinafter referred to as Process 2).

In Examples 1 to 3, where the entire 4,000 ppm of tungsten was added to the first mixture, the RSD of tungsten (W) was 14% or greater, whereas in Examples 4 to 7, where the tungsten content was divided and added to the second mixture, the RSD of tungsten (W) was 4% to 11%. In particular, as the ratio of tungsten added in Process 2 approached half of the total amount, the RSD of W was further improved. As in Examples 4 to 7, the tungsten content added in Process 2 increased the amount of tungsten remaining on the surface, thereby enhancing coating uniformity.

Comparative Examples 1 to 3 performed only two dry coating operations without introducing a semi-dry solution.

**In** Comparative Example 1, only a single heat treatment at 700 °C was performed after dry coating, while Comparative Example 2 included tungsten coating only during the 700 °C heat treatment and then proceeded with a heat treatment at 300 °C, and Comparative Example 3 included tungsten in both Process 1 and Process 2. In this case, the RSD of W was highest in Comparative Example 3. Comparative Examples 4 to 6 all used a semi-dry solution. Comparative Example 4 did not include tungsten coating during the 700 °C heat treatment, but introduced tungsten during the subsequent 300 °C heat treatment. Comparative Example 5 performed the 700 °C heat treatment in Process 1 without a dry coating source and performed the 300 °C heat treatment in Process 2 after introducing the entire coating source.

Comparative Example 6 employed a conventional semi-dry process without the 700 °C heat treatment and exhibited the largest RSD among all coating elements. Because the surface of the cathode active material dispersed with the dry coating source is covered with an amorphous sulfur-containing coating layer, the RSD of the dry-coated elements is high.

Further, when a boron compound was introduced, the RSD of coating elements other than B, such as Al and S, increased due to the coating layer morphology, whereas the RSD of the coating elements decreased as the heat treatment temperature in Process 2 increased.

### Experimental Example 4: TEM Analysis

When W coating is performed in Process 1, W reacts with residual lithium prior to the reaction between sulfur and residual lithium in Process 2, thereby forming a coating layer in advance, which is advantageous for forming a Li-containing W oxide coating layer. A coating layer including this Li-containing W oxide coating layer may enhance lithium-ion conductivity and reduce interfacial resistance of the cathode active material. In addition, the coating layer may increase the surface stability of the cathode active material and reduce gas generation caused by side reactions with the electrolyte during high-temperature cycling, thereby improving high-temperature performance.

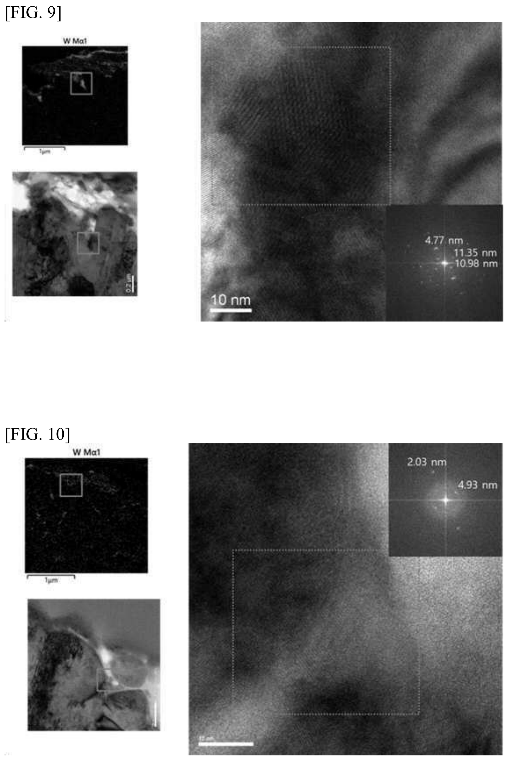

To confirm the Li-containing W oxide coating layer, a sample of Example 7 was processed by FIB and subjected to TEM analysis, and the results are shown in FIGS. 9 and 10.

The d-spacing (Å) at the region where W was present indicated that the coating layer included a mixed crystal structure of three phases: Li₂WO₄, WO₂, and WO₃.

### Experimental Example 5: Evaluation of Battery Characteristics

After manufacturing half-coin cells according to the examples and comparative examples, the initial capacity was measured by first charging (CC-CV 0.1C, 4.3 V, 0.005C cut-off) and discharging (CC 0.1C, 3.0 V cut-off). The 0.5C charging rate was then fixed, and discharging was carried out at different C-rates (0.5, 1, 2, and 4C) to evaluate the rate characteristics (4C discharge capacity/0.1C discharge capacity).

After the formation charge and discharge step at room temperature, the cycle-life evaluation was performed at 45 °C.

High-temperature cycle-life evaluation was performed by repeating 300 charging and discharging cycles at the above C-rate (charging: CC-CV 1C, 4.3 V, 0.05 C cut-off; discharging: CC 0.5C, 3.0 V cut-off), and the cycle-life retention (%) was calculated by dividing the discharge capacity at 300th cycle by the initial discharge capacity. The results are shown in Table 5 below.

**[TABLE 5]**

| | 0.1C charge capacity | 0.1C discharge capacity | Efficiency% | Second 0.1C discharge capacity | 1C discharge capacity | Rate characteristics (4C discharge/0.1C discharge) | Capacity retention (%) at 45 °C after 300 cycles |
|---|---|---|---|---|---|---|---|
| Example 1 | 230.5 | 211.6 | 91.8% | 213.8 | 194.8 | 78.9% | 87.6% |
| Example 2 | 233.3 | 212.8 | 91.2% | 214.3 | 195.2 | 79.1% | 87.1% |
| Example 3 | 240.3 | 213.9 | 89.0% | 216.5 | 196.5 | 79.7% | 85.9% |
| Example 4 | 234.0 | 212.7 | 90.9% | 215.1 | 195.8 | 81.9% | 88.5% |
| Example 5 | 234.2 | 213.1 | 91.0% | 215.7 | 196.1 | 82.8% | 88.4% |
| Example 6 | 235.9 | 215.4 | 90.9% | 216.5 | 196.8 | 83.9% | 91.7% |
| Example 7 | 236.2 | 214.9 | 91.0% | 216.4 | 195.7 | 84.1% | 91.6% |
| Comparative Example 1 | 233.5 | 202.0 | 86.5% | 204.6 | 189.0 | 85.7% | 83.5% |
| Comparative Example 2 | 232.8 | 204.1 | 87.7% | 206.0 | 188.7 | 83.9% | 84.1% |
| Comparative Example 3 | 233.0 | 207.8 | 89.2% | 209.4 | 191.1 | 84.1% | 84.9% |
| Comparative Example 4 | 236.9 | 209.1 | 88.3% | 210.3 | 191.4 | 83.2% | 85.6% |
| Comparative Example 5 | 237.8 | 213.2 | 89.6% | 214.3 | 194.9 | 83.3% | 83.1% |
| Comparative Example 6 | 232.1 | 213.8 | 92.1% | 214.3 | 194.0 | 84.1% | 84.8% |

Examples 1 to 3 involved W coating performed only in Process 1, and the W coating layer formed on the surface of the cathode active material was less uniform than in Examples 4 to 7, resulting in lower initial capacity due to resistance at the interface of the cathode active material. However, in Example 3, which included B coating, and in Example 2, which was heat-treated at a higher temperature in Process 2, the discharge capacity increased due to an increase in the initial charging amount, although the high-temperature cycle-life characteristics were lower than those of Example 1.

Examples 4 to 7 involved W coating performed in both Processes 1 and 2, and the W coating layer on the surface of the cathode active material improved lithium-ion conductivity, resulting in increased initial capacity as well as improved rate characteristics and cycle-life characteristics. In particular, as the W content added in Process 2 increased, the formation of a uniform W coating layer on the surface became more favorable, thereby further improving the electrochemical performance in Examples 6 and 7.

In Comparative Examples 1 to 3, the reaction activity between the introduced coating source and the residual lithium was low, resulting in a limited reduction effect of residual lithium and a significant decrease in discharge capacity due to reduced efficiency. In particular, Comparative Example 1, in which only Process 1 including the 700 °C heat treatment was performed and the degree of residual lithium reduction was the lowest, exhibited the poorest electrochemical characteristics, whereas in Comparative Example 3, in which the W content was divided between Processes 1 and 2, the efficiency slightly increased due to the reinforced W coating layer on the surface of the cathode active material.

In Comparative Examples 4 to 5, the initial discharge capacity improved compared to Comparative Examples 1 to 3 due to the enhanced the effect of reducing residual lithium. However, unlike the examples, since Process 1 did not include W coating, the W content on the surface of the cathode active material resulting from W penetration into the cathode active material was low, resulting in lower cycle-life characteristics compared to the Examples.

In Comparative Example 6, the initial efficiency was higher than that of some examples and comparative examples including a 700 °C heat treatment. However, similar to Comparative Examples 4 and 5, the W content on the surface of the cathode active material resulting from W penetration into the cathode active material was low, resulting in lower high-temperature cycle-life characteristics compared to the examples.

### [Description of Reference Numerals]

100: Cathode
105: Cathode current collector
107: Cathode lead
110: Cathode active material layer
120: Anode active material layer
125: Anode current collector
127: Anode lead
130: Anode
140: Separator
150: Electrode assembly
160: Case

The invention is also defined by the following aspects:
Aspect 1. A cathode active material for a lithium secondary battery comprising lithium-nickel metal oxide particles in the form of secondary particles in which a plurality of primary particles are agglomerated, wherein the lithium-nickel metal oxide particles include a tungsten compound at interfaces between the primary particles and satisfy Equation 1 below: $0.7 \leq A / \left(A+B\right) \leq 0.8$ (in Equation 1, A denotes a tungsten signal ratio measured by energy-dispersive X-ray spectroscopy (EDS) from a surface of the secondary particle to a depth of 10 nm toward a center of the secondary particle, and B denotes a tungsten signal ratio measured by EDS from the surface of the secondary particle to a point corresponding to 70% or less of a radius toward the center of the secondary particle).
Aspect 2. The cathode active material for a lithium secondary battery according to aspect 1, wherein a relative standard deviation (RSD) value of the tungsten content, measured ten times at different points from the surface of the secondary particle to a depth of 10 nm toward the center of the secondary particle using X-ray photoelectron spectroscopy, is 17% or less.
Aspect 3. The cathode active material for a lithium secondary battery according to aspect 2, wherein the relative standard deviation (RSD) value is 4% to 17%.
Aspect 4. The cathode active material for a lithium secondary battery according to any one of aspect 1 to 3, wherein the residual lithium content, as determined by CS (Carbon/Sulfur) analysis, is 2768 ppm or less.
Aspect5.The cathode active material for a lithium secondary battery according to any one of aspect 1 to 4, wherein the lithium-nickel metal oxide particles include a chemical structure represented by Formula 1 below:

   [Formula 1] Liₐ[Ni_{b}Co_{c}Mn_{d}X_{y}]O_{c}

   (in Formula 1, X includes at least one of S, Al, B, Ti, Sr, Zr, P, W and K, and 0.5<a<1.5, 0.8≤b≤1, 0≤c<0.1, 0≤d<0.1, 1.5<e<2.5, and 0≤y<0.1).
Aspect 6. The cathode active material for a lithium secondary battery according to any one of aspect 1 to 5, wherein the tungsten compound comprises a lithium-tungsten oxide. Aspect 7. The cathode active material for a lithium secondary battery according to aspect 6, wherein the lithium-tungsten oxide is represented by Formula 2 below:

   [Formula 2] LiₓW_{y}O_{z}

   (in Formula 2, 0<x≤3, 0<y≤5, and 0<z≤8).
Ascpect 8. The cathode active material for a lithium secondary battery according to any one of aspect 1 to 7, wherein the content of tungsten, based on the total weight of the lithium-nickel metal oxide particles, is 3,000 ppm to 5,000 ppm.
Aspect 9. A lithium secondary battery comprising:
   a cathode for a lithium secondary battery comprising the cathode active material for a lithium secondary battery according to any one of aspect 1 to 8; and
   an anode disposed opposite the cathode.
Aspect 10. A method for manufacturing a cathode active material for a lithium secondary battery, the method comprising: preparing preliminary lithium-nickel metal oxide particles; dry mixing the preliminary lithium-nickel metal oxide particles with a tungsten compound to form a first mixture; calcining the first mixture; preparing a second mixture by adding at least one of a sulfur compound and a boron compound, and 1% by weight to 5% by weight of a solvent based on the total weight of the second mixture, to the calcined first mixture; and calcining the second mixture. Aspect 11. The method according to aspect 10, further comprising dry mixing a tungsten compound after the step of calcining the first mixture.
Aspect 12. The method according to aspect 11, wherein the cathode active material comprises lithium-nickel metal oxide particles, and wherein the lithium-nickel metal oxide particles have the form of secondary particles in which a plurality of primary particles are agglomerated, and satisfy Equations 2 to 4 below: $Y = 0.154 X + 0.7068$ (Y satisfies Equation 3, and X satisfies Equation 4), $Y = \frac{A}{\left(A+B\right)}$ (A denotes a tungsten signal ratio measured by energy-dispersive X-ray spectroscopy (EDS) from a surface of the secondary particle to a depth of 10 nm toward a center of the secondary particle, and B denotes a tungsten signal ratio measured by EDS from the surface of the secondary particle to a point corresponding to 70% or less of a radius toward the center of the secondary particle), and $X = \frac{D}{\left(C+D\right)}$ (C denotes a tungsten content (ppm) included in the first mixture based on the total weight of the lithium-nickel metal oxide particles, and D denotes a tungsten content (ppm) dry-mixed after the step of calcining the first mixture based on the total weight of the lithium-nickel metal oxide particles).
Aspect 13. The method according to any one of aspect 10 to 12, wherein a heat treatment temperature of the step of calcining the first mixture is higher than a heat treatment temperature of the step of calcining the second mixture.
Aspect 14. The method according to any one of aspect 10 to 13, wherein the step of preparing the preliminary lithium-metal oxide particles comprises heat-treating a mixture of a transition metal precursor and a lithium source, and wherein the heat treatment temperature is higher than the heat treatment temperature of the step of calcining the first mixture and the heat treatment temperature of the step of calcining the second mixture.
Aspect 15. The method according to aspect 11, wherein the content of tungsten in the first mixture formed in the step of forming the first mixture, based on the total weight of the lithium-nickel metal oxide particles, is 2,000 ppm to 4,000 ppm, and the content of tungsten dry-mixed after the step of calcining the first mixture, based on the total weight of the lithium-nickel metal oxide particles, is 2,000 ppm or less.

## Claims

1. A cathode active material for a lithium secondary battery comprising lithium-nickel metal oxide particles in the form of secondary particles in which a plurality of primary particles are agglomerated,
wherein the lithium-nickel metal oxide particles include a tungsten compound at interfaces between the primary particles and satisfy Equation 1 below: $0.7 \leq A / \left(A+B\right) \leq 0.8$ (in Equation 1, A denotes a tungsten signal ratio measured by energy-dispersive X-ray spectroscopy (EDS) from a surface of the secondary particle to a depth of 10 nm toward a center of the secondary particle, and B denotes a tungsten signal ratio measured by EDS from the surface of the secondary particle to a point corresponding to 70% or less of a radius toward the center of the secondary particle).

2. The cathode active material for a lithium secondary battery according to claim 1, wherein a relative standard deviation (RSD) value of the tungsten content, measured ten times at different points from the surface of the secondary particle to a depth of 10 nm toward the center of the secondary particle using X-ray photoelectron spectroscopy, is 17% or less.

3. The cathode active material for a lithium secondary battery according to claim 2, wherein the relative standard deviation (RSD) value is 4% to 17%.

4. The cathode active material for a lithium secondary battery according to any one of claims 1 to 3, wherein the residual lithium content, as determined by CS (Carbon/Sulfur) analysis, is 2768 ppm or less.

5. The cathode active material for a lithium secondary battery according to any one of claims 1 to 4, wherein the lithium-nickel metal oxide particles include a chemical structure represented by Formula 1 below:
[Formula 1] Liₐ[Ni_{b}Co_{c}Mn_{d}X_{y}]O_{c}
(in Formula 1, X includes at least one of S, Al, B, Ti, Sr, Zr, P, W and K, and 0.5<a<1.5, 0.8≤b≤1, 0≤c<0.1, 0≤d<0.1, 1.5<e<2.5, and 0≤y<0.1).

6. The cathode active material for a lithium secondary battery according to any one of claims 1 to 5, wherein the tungsten compound comprises a lithium-tungsten oxide.

7. The cathode active material for a lithium secondary battery according to claim 6, wherein the lithium-tungsten oxide is represented by Formula 2 below:
[Formula 2] LiₓW_{y}O_{z}
(in Formula 2, 0<x≤3, 0<y≤5, and 0<z≤8).

8. The cathode active material for a lithium secondary battery according to any one of claims 1 to 7, wherein the content of tungsten, based on the total weight of the lithium-nickel metal oxide particles, is 3,000 ppm to 5,000 ppm.

9. A lithium secondary battery comprising:
a cathode for a lithium secondary battery comprising the cathode active material for a lithium secondary battery according to any one of claims 1 to 8; and
an anode disposed opposite the cathode.

10. A method for manufacturing a cathode active material for a lithium secondary battery, the method comprising:
preparing preliminary lithium-nickel metal oxide particles;
dry mixing the preliminary lithium-nickel metal oxide particles with a tungsten compound to form a first mixture;
calcining the first mixture;
preparing a second mixture by adding at least one of a sulfur compound and a boron compound, and 1% by weight to 5% by weight of a solvent based on the total weight of the second mixture, to the calcined first mixture; and
calcining the second mixture.

11. The method according to claim 10, further comprising dry mixing a tungsten compound after the step of calcining the first mixture.

12. The method according to claim 11, wherein the cathode active material comprises lithium-nickel metal oxide particles, and
wherein the lithium-nickel metal oxide particles have the form of secondary particles in which a plurality of primary particles are agglomerated, and satisfy Equations 2 to 4 below: $Y = 0.154 X + 0.7068$
(Y satisfies Equation 3, and X satisfies Equation 4), $Y = \frac{A}{\left(A+B\right)}$
(A denotes a tungsten signal ratio measured by energy-dispersive X-ray spectroscopy (EDS) from a surface of the secondary particle to a depth of 10 nm toward a center of the secondary particle, and B denotes a tungsten signal ratio measured by EDS from the surface of the secondary particle to a point corresponding to 70% or less of a radius toward the center of the secondary particle), and $X = \frac{D}{\left(C+D\right)}$
(C denotes a tungsten content (ppm) included in the first mixture based on the total weight of the lithium-nickel metal oxide particles, and D denotes a tungsten content (ppm) dry-mixed after the step of calcining the first mixture based on the total weight of the lithium-nickel metal oxide particles).

13. The method according to any one of claims 10 to 12, wherein a heat treatment temperature of the step of calcining the first mixture is higher than a heat treatment temperature of the step of calcining the second mixture.

14. The method according to any one of claims 10 to 13, wherein the step of preparing the preliminary lithium-metal oxide particles comprises heat-treating a mixture of a transition metal precursor and a lithium source, and
wherein the heat treatment temperature is higher than the heat treatment temperature of the step of calcining the first mixture and the heat treatment temperature of the step of calcining the second mixture.

15. The method according to claim 11, wherein the content of tungsten in the first mixture formed in the step of forming the first mixture, based on the total weight of the lithium-nickel metal oxide particles, is 2,000 ppm to 4,000 ppm, and
the content of tungsten dry-mixed after the step of calcining the first mixture, based on the total weight of the lithium-nickel metal oxide particles, is 2,000 ppm or less.
